# EUROPEAN PATENT APPLICATION

(11) **EP 4 640 793 A1**
(43) Date of publication of application: **29.10.2025**
(21) Application number: 23918443.5
(22) Date of filing: 27.01.2023
(51) Int. Cl.: C10G 1/10, C08J 11/12

(54) **RESIN MATERIAL THERMAL DECOMPOSITION TREATMENT METHOD, RESIN MATERIAL THERMAL DECOMPOSITION TREATMENT SYSTEM, AND VENT DEVICE**

(71) Applicant: The Japan Steel Works, Ltd., Tokyo 141-0032 (JP)
(72) Inventor: SAGA, Daigo, Tokyo 141-0032 (JP)
(74) Representative: Simmons & Simmons LLP (Munich)
(86) International application number: PCT/JP2023/002737
(87) International publication number: WO 2024/157483

(57) **Abstract**

Provided are a resin material thermal decomposition treatment method and a thermal decomposition treatment system that allow thermal decomposition treatment of a resin material to be carried out continuously and efficiently. The thermal decomposition treatment system for a resin material has: an extruder having a cylinder 12 into which a resin material is introduced, a heat source provided to the cylinder 12 to thermally decompose the resin material, a screw disposed within the cylinder 12 for transporting the resin material, a vent 14a for exhausting gas containing a plurality of components generated within the cylinder 12 by thermal decomposition of the resin material, and a first heat exchanger 14b connected to the vent 14a and liquefying part of the gas; and a second heat exchanger 15 for cooling and liquefying the remainder of the gas that has passed through the first heat exchanger 14b as a gas.

## Description

### TECHNICAL FIELD

The present invention relates to a resin-material thermal decomposition method, a resin-material thermal decomposition system, and a ventilator.

### BACKGROUND ART

Currently, plastic products are used in a very wide range of fields, and a use amount of the plastic products is enormous. Meanwhile, the disposal of the plastic products costs money, and there is a problem of their influence on environment due to the flow of their components into rivers, seas and the like, when, for example, they are left in the natural environment.

For this reason, effective use of various resins as resources by recycling has been variously studied. For example, in processing waste plastics, a technique of using an extruder having a screw used in extrusion molding of a resin to discharge a gas generated in a cylinder of the extruder through a vent of the cylinder to the outside has been known (see, for example, Japanese Patent Application Laid-Open Publication No. 2005-349838 (Patent Document 1), Japanese Patent Application Laid-Open Publication No. 2008-302555 (Patent Document 2), and the like).

### RELATED ART DOCUMENTS

### PATENT DOCUMENTS

Patent Document 1: Japanese Patent Application Laid-Open Publication No. 2005-349838
Patent Document 2: Japanese Patent Application Laid-Open Publication No. 2008-302555

### SUMMARY OF THE INVENTION

### PROBLEMS TO BE SOLVED BY THE INVENTION

Process and recycle of resin materials such as waste plastics have been promoted in recent years as described above, and it has been desirable to efficiently decompose the resin materials.

Thus, an objective of the present invention is to provide a resin-material thermal decomposition method and a resin-material thermal decomposition system, by which thermal decomposition of the resin material can be continuously and efficiently performed. Other problems and novel characteristics will be apparent from the description of the present specification and the accompanying drawings.

### MEANS FOR SOLVING THE PROBLEMS

A resin-material thermal decomposition method disclosed in the present application includes: a step (a) of thermally decomposing the resin material inside a cylinder of an extruder including a screw; a step (b) of discharging, from a vent, a gas containing a plurality of species of components generated by the thermal decomposition of the resin material after the step (a); a step (c) of cooling and liquefying a part of the gas by a first heat exchanger after the step (b); and a step (d) of cooling and liquefying a gas remainder by a second heat exchanger after the step (c).

A resin-material thermal decomposition system disclosed in the present application includes (a) an extruder and (b) a second heat exchanger. Here, the extruder includes: a cylinder into which the resin material is introduced; a heat source disposed in the cylinder to thermally decompose the resin material; a screw disposed inside the cylinder and feeding the resin material; a vent used for discharging a gas containing a plurality of species of components generated inside the cylinder by the thermal decomposition of the resin material; and a first heat exchanger connected to the vent and liquefying a part of the gas, and the second heat exchanger cools and liquefies a gas remainder passed in gaseous form through the first heat exchanger.

A ventilator for an extruder disclosed in the present application includes: a vent connected to the extruder; and a heat exchanger disposed in the vent and used for cooling and liquefying a part of a discharge gas discharged from the vent.

### EFFECTS OF THE INVENTION

According to a resin-material thermal decomposition method and a resin-material thermal decomposition system disclosed in the present application, thermal decomposition of a resin material such as waste plastic can be continuously and efficiently performed.

According to a ventilator for an extruder disclosed in the present application, a ventilator suitable for an extruder serving as a member used for efficiently performing thermal decomposition in the thermal decomposition method and thermal decomposition system described above can be provided.

### BRIEF DESCRIPTIONS OF THE DRAWINGS

[FIG. 1] is a diagram illustrating a schematic configuration of a resin-material thermal decomposition system in one embodiment.
[FIG. 2] is a diagram illustrating a schematic configuration of a cylinder used in the resin-material thermal decomposition system in FIG. 1.
[FIG. 3] is a diagram illustrating an outline of an inner structure of a ventilator in FIG. 1.
[FIG. 4] is a diagram illustrating a configuration of a resin-material thermal decomposition system in another embodiment.
[FIG. 5] is a diagram illustrating a modification example of the resin-material thermal decomposition system in FIG. 4.
[FIG. 6] is a diagram illustrating a schematic configuration of a resin-material thermal decomposition system in still another embodiment.

### DETAILED DESCRIPTION OF PREFERRED EMBODIMENTS

Hereinafter, embodiments will be described in detail with reference to the accompanying drawings. Note that components having the same function are denoted by the same reference symbols throughout all the drawings for describing the embodiments, and the repetitive description thereof will be omitted. In addition, in the following embodiments, the description of the same or similar portions is not repeated in principle unless particularly required.

### <First Embodiment>

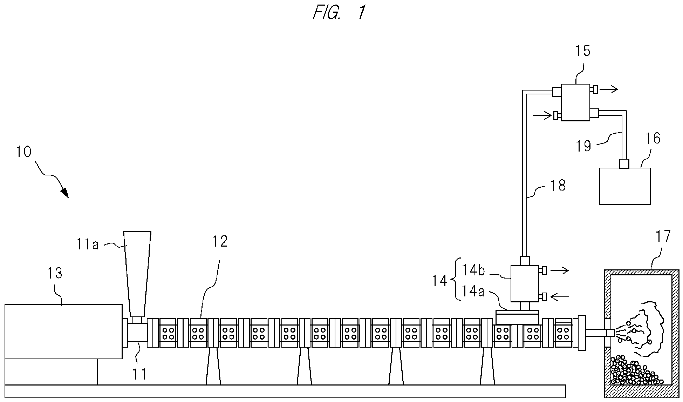

An overall configuration of a resin-material thermal decomposition system in the present embodiment, and a resin-material thermal decomposition method using the system will be described with reference to FIG. 1.

### [Resin-Material Thermal Decomposition System]

FIG. 1 is an explanatory diagram (side view) illustrating a schematic configuration of a resin-material thermal decomposition system 10 of the first embodiment. The resin-material thermal decomposition system 10 is an apparatus used for thermally decomposing a thermal-decomposition target resin material by heating, and separating a monomer or a low-molecular-weight compound generated by the decomposition, based on its property (gas or liquid), and then, collecting and processing the monomer or the low-molecular-weight compound.

The resin-material thermal decomposition system 10 includes: a resin material supplier 11; a cylinder 12 including a screw; a rotational drive mechanism 13 that drives the screw of the cylinder 12; a ventilator 14 including a vent 14a and a heat exchanger 14b; a heat exchanger 15; a liquid collection container 16; and a solid collection container 17.

The resin-material supply portion 11 is a member that supplies the decomposition target resin material to the cylinder 12. In the present embodiment, for example, a thermoplastic resin or a thermosetting resin is supplied as the decomposition target resin material. Materials of various forms such as pellet, powder and flake are used as the resin material to be supplied, and such a resin material is introduced, for example, from above into the resin-material supply portion 11 including a hopper 11a by a feeder or the like, and is supplied into the cylinder 12.

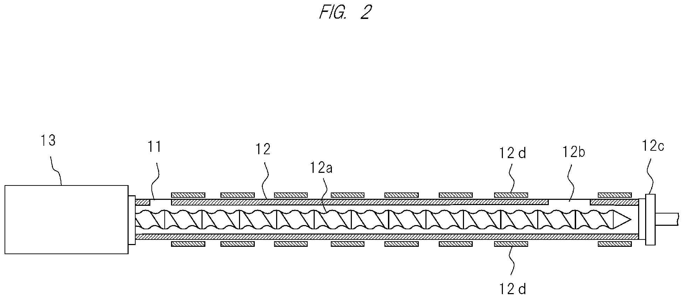

The cylinder 12 includes a space into which the resin material is fed, to be formed therein, and the cylinder 12 includes a screw 12a for feeding the resin material into the space. FIG. 2 illustrates a cross-sectional view of the cylinder 12 so as to easily understand an inner structure of the cylinder 12 of the resin-material thermal decomposition system 10 of FIG. 1. The cylinder 12 is provided with: an opening 12b enabling a gas generated in the cylinder 12 to be discharged outside; an end portion 12c enabling a residue to be discharged; and a plurality of heaters (heat sources) 12d enabling each cylinder block of the cylinder 12 to be heated. The extruder is made of these members. The opening 12b is provided with the ventilator 14 described in detail later.

The resin material supplied to the resin-material supply portion 11 is gradually fed inside the cylinder 12 toward the end portion 12c (downstream side) of the cylinder 12 by rotation of the screw 12a of the cylinder 12.

The cylinder 12 is made of, for example, joint of a plurality of cylinder blocks, and inside of each cylinder block has a space into which the resin material can be fed. The space is provided with the screw 12a, and the screw 12a is connected to the rotational drive mechanism 13. The screw 12a can be rotated by the rotational drive mechanism 13 to feed the decomposition target resin material inside the cylinder 12.

Moreover, the cylinder 12 is provided with the heat sources such as the heaters so that the temperature of the cylinder 12 can be adjusted. The decomposition target resin material is fed from the resin-material supply portion 11 toward the end portion 12c. In this process, the resin material is gradually heated by the above-described heaters and the like, and becomes a molten and plasticized resin material. Moreover, such a resultant molten and plasticized resin material can be easily fed inside the cylinder 12, and is fed to the downstream side while being further heated. In the present embodiment, the temperature of the heating is gradually increased so that the resin material is heated to a temperature at which the resin material is thermally decomposed.

Moreover, the molten resin inside the cylinder 12 is pressurized by the screw 12a, and may be pressurized simultaneously with the heating. By the pressurization simultaneous with the heating, the resin-material thermal decomposition can be further accelerated. In addition, by the thermal decomposition, the resin material is decomposed into the monomer or another low-molecular-weight compound configuring the resin. In this process, a part of the low-molecular compound inside the cylinder 12 becomes a gas. The gas generally contains a plurality of species of components generated in the resin-material decomposition process.

The end portion 12c is a portion through which the residue that is not gaseous but molten of a resin-material decomposition substance that has been fed and thermally decomposed in the cylinder 12 is discharged into the solid collection container 17. The residue is a liquid substance heated to high temperature, but may be discharged in a state mixed with a solid form when the resin material contains a filler or the like.

The rotational drive mechanism 13 is an apparatus for rotating the screw 12a disposed inside the cylinder 12. The resin material which is the decomposition target substance can be fed through the inside of the cylinder 12 by using the screw rotated by the rotational drive mechanism 13.

Note that either a twin screw extruder in which two screws are disposed in the cylinder 12 or a single screw extruder in which one screw is disposed in the cylinder 12 is acceptable. In the case of the twin screw extruder, the two screws are rotated while being placed in parallel with each other. Two shafts may be placed to be engaged with each other or may be placed to be disengaged with each other.

The twin screw extruder is preferable since the twin screw extruder including two screws has a higher extrusion output than that of the single screw extruder including one screw because of having the high efficiency of the raw material feeding, the high kneading ability, and the like, if the screw diameters are same each other, and has various advantages in that, for example, the twin screw extruder has flexibility that is the freely changeable operating conditions such as a screw rotation speed and a barrel set temperature. Here, an extending direction of the cylinder 12 and an extending direction of the screw in the cylinder 12 are the same as each other.

The ventilator 14 is an apparatus configured to include: the vent 14a disposed in the cylinder 12; and the heat exchanger 14b. The vent 14a is a member through which the gas generated inside the cylinder 12 is discharged to outside of the cylinder 12, and may have the same configuration as that of a vent also disposed in an existing extruder. The vent 14a in the present embodiment is disposed so that heat exchange process of the gas is sequentially performed by the heat exchanger 14b described below and the heat exchanger 15 described later.

The heat exchanger 14b is disposed integrally with an upper side of the vent 14a to form the ventilator 14. The heat exchanger 14b is an apparatus having a function of cooling and liquefying a part of the gas containing the plurality of species of components. For example, here, temperature control is performed so that a component having a high boiling point (high boiling point gas component) of the plurality of species of components described above is liquefied while a component having a lower boiling point (lower boiling point gas component) than the boiling point of the high boiling point gas component thereof is passed in gaseous form.

The temperature control in the heat exchanger 14b can be performed by supplying/discharging a coolant (cooling medium) maintained at a predetermined temperature to/from a pipe disposed inside. In FIG. 1, the flows of the supply and discharge of the coolant are illustrated with the arrows. The temperature of the coolant needs to be a temperature enabling a part of the coolant to be cooled and liquefied by the heat exchanger 14b as described above, and therefore, the temperature is controlled to be lower than the boiling point of the high boiling point gas component and equal to or higher than the melting point of the high boiling point gas component. Thereby, the high boiling point gas component can be cooled and liquefied by the heat exchanger 14b.

Moreover, in such a case, the temperature of the coolant is preferably controlled to be higher than the boiling point of the low boiling point gas component. The temperature control as described above is preferred because of enabling the high boiling point gas component and the low boiling point gas component to be separated, and particularly enabling the gas supplied to the heat exchanger 15 to avoid containing the high boiling point gas component. Here, the gas remainder passed without being liquefied by the heat exchanger 14b is supplied to the heat exchanger 15 through a pipe 18.

The ventilator 14 can be disposed at an optional position of the cylinder 12. In order to efficiently process the generated gas, note that it is preferable to dispose the ventilator 14 at a point inside the cylinder 12 at which an amount of the generated gas is large or at a point closer to the downstream side (the end portion 12c of the cylinder 12) than the point at which the amount of the generated gas is large.

The heat exchanger 15 is an apparatus that cools and liquefies the gas (gas remainder) unliquefied in the heat exchanger 14b described above among the gas containing the plurality of species of components. For example, here, the temperature control is performed to liquefy the low boiling point gas component among the plurality of species of components described above.

As similar to the heat exchanger 14b, the temperature control by the heat exchanger 15 can be performed by supplying/discharging a coolant maintained at a predetermined temperature to/from a pipe disposed inside. In FIG. 1, the flows of the supply and discharge of the coolant are illustrated with the arrows.

The temperature of the coolant needs to be a temperature enabling the gas remainder to be cooled and liquefied by the heat exchanger 145, and therefore, the temperature is controlled to be lower than the boiling point of the low boiling point gas component and equal to or higher than the melting point of the low boiling point gas component as described above. Thereby, the low boiling point gas component can be cooled and liquefied by the heat exchanger 15. The temperature control as described above can separate the low boiling point gas component in the liquid form, and therefore, can collect the gas in the liquid form.

Moreover, the temperature of the coolant is preferably lower than the melting point of the high boiling point gas component. In this case, this temperature is a conventional problematic condition that forms a solid substance in a heat exchanger. However, according to the present embodiment, the high boiling point gas component is not contained in the gas (gas remainder) processed by the heat exchanger 15, and therefore, this temperature does not cause such a problem.

The heat exchanger 15 liquefies the low boiling point gas component as depicted above. However, if the gas contains a plurality of species of low boiling point gas components, the heat exchanger 15 may be configured to liquefy some of them and discharge a gas component having a much lower boiling point to ambient air, and besides, perform another process in a release gas process apparatus or the like. Note that the release to ambient air is performed not to adversely affect the environment. Here, the gas components liquefied by the heat exchanger 15 are collected into the liquid collection container 16 through a pipe 19.

Moreover, the temperatures of the coolants in the heat exchangers 14b and 15 described above may be controlled so as to maintain each set temperature (at which, for example, the high boiling point gas component and the low boiling point gas component can be liquefied as described above) in controllers provided for controlling these temperatures.

The liquid collection container 16 is a container that stores a component liquefied by the heat exchanger 15. The liquid collection container 16 may be made of a material enabling the liquefied component to be stably stored. Moreover, the liquid collection container 16 may have an open system or a closed system for ambient air. The closed system is preferred if the quality of the collected liquid is changed or another failure is caused when the collected liquid is in contact with air.

The solid collection container 17 is a container that stores the residue of the resin material which is discharged from the end portion 12c of the cylinder 12 without being gasified under the thermal decomposition by heating in the cylinder 12 as described above.

The residue collected into the solid collection container 17 is in a molten (liquified) state heated at high temperature, or is discharged as a liquid substance mixed with a solid if the resin material contains a filler or the like. On the other hand, the residue is gradually cooled and solidified inside the solid collection container 17 when being discharged into the solid collection container 17, and the solid residue is successively deposited on the bottom of the solid collection container 17.

The solid collection container 17 may be made of a material enabling stable storing of the liquid flowing out of the end portion 12c of the cylinder 12 and the cooled and solidified solid. Moreover, the solid collection container 17 may have an open system or a closed system for ambient air. The closed system is preferred if the quality of the collected liquid is changed or a risk of combustion is caused when the collected liquid is in contact with air. Moreover, a cooling source may be disposed to accelerate the solidification of the residue.

### <Resin-Material Thermal Decomposition Method>

Next, each step of the resin-material thermal decomposition method according to the present embodiment will be described with reference to the case of using the resin-material thermal decomposition system 10 described above.

First, the resin material is thermally decomposed inside the cylinder 12 of the extruder (step (a); thermal decomposition step). In this step, the decomposition target resin material is supplied through the resin-material supply portion 11 into the cylinder 12 included in the thermal decomposition system 10, and is heated inside the cylinder 12 to thermally decompose the resin material. Here, the resin material supplied into the cylinder 12 is gradually heated and thermally decomposed while being fed inside the cylinder 12 toward the end portion 12c by the screw 12a.

Note that the supplied decomposition target resin product is not particularly limited as long as the resin product can be thermally decomposed by heating, but may be, for example, a resin material such as polyethylene (PE) resins, polypropylene (PP) resins, polyamide-6 (PA6) resins, polycarbonate (PC) resins, polyethylene terephthalate (PET) resins, and polybutylene terephthalate (PBT) resins.

The heat sources such as heaters are disposed in the outer periphery of the cylinder 12, and are configured so that the temperature of the resin material is gradually increased by the heaters while the resin material is fed. Moreover, the resin material can be molten and plasticized by the heating, and can be easily fed by the screw 12a.

With regard to the heating temperature in the thermal decomposition, the heating is preferably performed so that, for example, the temperature of the resin is about 250 to 400°C although depending on the resin material to be used. Moreover, pressurization is also acceptable in the thermal decomposition step. The pressurization advances the thermal decomposition, and therefore, is preferable. In the case of performing the pressurization, the pressurization is preferably performed so that an in-machine pressure is 0.3 to 20.0 MPa.

The advancement of the thermal decomposition by the heating as described above cleave bonds of the resin material to result in the lower molecular weight of the resin material. The thermal decomposition decomposes the resin material into the monomer or another low-molecular-weight compound configuring the resin. The decomposed and generated monomer or low-molecular-weight compound is gasified inside the cylinder 12. The gas generated here generally contains a plurality of species of components.

Then, the gas that has been generated by the thermal decomposition and has contained the plurality of species of components is discharged from the vent 14a disposed in the cylinder 12 (step (b); discharge step). In this step, the gas generated by the thermal decomposition of the resin material inside the cylinder 12 is discharged outside the cylinder 12. In the case of the resin-material decomposition process as described in the present embodiment, the resin material is heated and thermally decomposed, in other words, the chemical bonds of the constituent resin are cleaved to result in the lower molecular weight thereof, and therefore, a large amount of gas is generated.

The gas generated as described above is a process target gas in the present embodiment, and the generated gas is discharged outside the cylinder 12 through the opening 12a. The existing extruder is also provided with a vent that discharges a gas generated inside a cylinder. As similar to this, the vent 14a may be disposed to discharge the gas.

The vent 14a is disposed in the opening 12a of the cylinder 12, and is configured to be able to discharge the gas inside the cylinder 12 from the opening 12a to outside of the cylinder 12 through the vent 14a. Moreover, in the present embodiment, the vent 14a is provided with the heat exchanger 14b to configure the ventilator 14.

Accordingly, in the present embodiment, the gas discharged through the vent 14a is introduced as it is into the heat exchanger 14b. The heat exchanger 14b cools and liquefies a part of the gas containing the plurality of species of components, but passes the remainder as it is in gaseous form (step (c); liquefaction step 1).

For example, each component contained in the gas containing the plurality of species of components has a specific boiling point. The contained gas is a mix state of a component having a comparatively high boiling point (high boiling point gas component) and a component having a lower boiling point (low boiling point gas component) than the boiling point of the high boiling point gas component.

In order to cool and liquefy a part of the gas containing the plurality of species of components as described above, for example, for the mixed gas components, the heat exchanger 14b is controlled to a temperature that liquifies the high boiling point gas component described above. Specifically, the temperature of the heat exchanger 14b is controlled to a temperature that is lower than the boiling point of the high boiling point gas component and equal to or higher than the melting point of the high boiling point gas component. Thereby, the high boiling point gas component is cooled and liquified by the heat exchanger 14b.

Moreover, in this process, the temperature of the heat exchanger 14b is preferably controlled to be higher than the boiling point of the low boiling point gas component. The temperature control as described above is preferred because of enabling the high boiling point gas component and the low boiling point gas component to be separated, and particularly enabling the gas supplied to the heat exchanger 15 to avoid containing the high boiling point gas component. Here, the gas remainder passed without being liquefied by the heat exchanger 14b is supplied to the heat exchanger 15 through the pipe 18.

Then, finally, the gas (gas remainder) that has not been liquefied in the step (c) described above is introduced into the heat exchanger 15, and the gas is cooled and liquefied (step (d); liquefaction step 2). In other words, here, the temperature control is performed so that the low boiling point gas component among the plurality of species of components described above is liquefied. Thereby, the low boiling point gas component is cooled and liquified by the heat exchanger 15.

Moreover, in this process, the temperature of the heat exchanger 15 is preferably lower than the melting point of the high boiling point gas component. In this case, this temperature is a conventional problematic condition that forms a solid substance in a heat exchanger. However, according to the present embodiment, the high boiling point gas component is not contained in the gas (gas remainder) processed by the heat exchanger 15, and therefore, this temperature does not cause such a problem.

The resultant liquid obtained in the step (d) is collected and stored in the liquid collection container 16. Here, the collected liquid can be utilized as a raw material (monomer) for use in manufacture (polymerization reaction) of a new resin, or as a material for another reaction, or can be subjected to a discarding process for discard.

If three or more species of components are mixed in the gas discharged from the cylinder 12, note that the high boiling point gas component and the low boiling point gas component can be optionally determined depending on the purpose thereof. Moreover, if three or more species of components are mixed in the gas, some of them may be liquified in the step (d), and a gas component having a much lower boiling point may be passed as it is and be released to ambient air, and besides, another process in a release gas process apparatus or the like may be performed. Note that the release into ambient air is performed not to adversely affect the environment. Here, the gas components liquefied by the heat exchanger 15 are collected into the liquid collection container 16 through the pipe 19.

Moreover, if the gas component having the much lower boiling point is passed by the heat exchanger 15 in the step (d), the similar liquefaction step can be further performed once or more times to sequentially further separate each component.

On the other hand, the ungasified residue of the resin material processed inside the cylinder 12 by the thermal decomposition is moved as the heated liquid substance through the cylinder 12 to the end portion 12c, and is discharged from the end portion 12c to the solid collection container 17. The discharged residue is gradually cooled and solidified inside the solid collection container 17.

The solid collection container 17 increasingly stores the residue in the course of time of the process, and therefore, is replaced with an empty solid collection container 17, after the process performed for a certain period of time, or depending on the amount of the residue stored in the container. Then, the residue stored into the solid collection container 17 is subjected to the discarding process. Note that the solid collection container 17 is replaced after the operation of the resin-material thermal decomposition system temporarily stops, and after the replacement, the system may be reoperated to advance the resin-material thermal decomposition.

### [Function of Heat Exchanger]

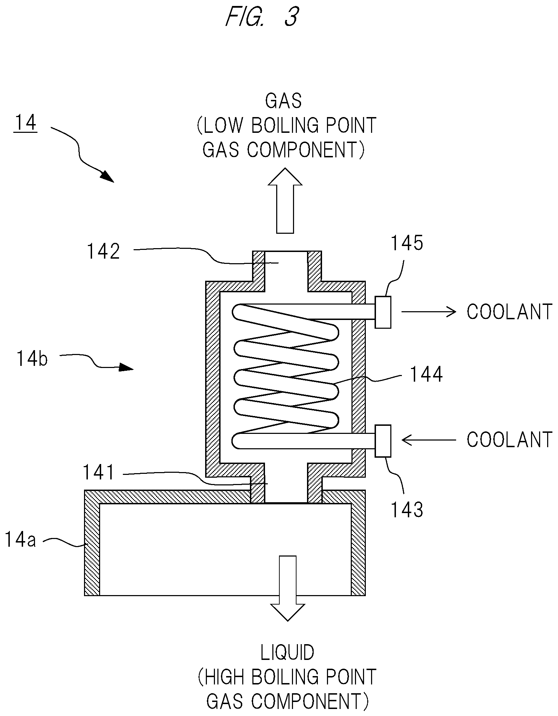

The configurations and functions of the heat exchanger 14b and the heat exchanger 15 have been already explained above, but will be described in more detail below with reference to FIG. **3****.**

FIG. 3 is a cross-sectional view illustrating the inner structure of the ventilator 14. The vent 14a is a member that is disposed in the cylinder 12 and introduces the gas generated inside the cylinder 12 into the heat exchanger 14b while storing the gas therein as described above.

The heat exchanger 14b includes: a lower opening 141 connected to the vent 14a; and an upper opening 142 connected to the heat exchanger 15 through the pipe. Moreover, the heat exchanger 14b includes: a coolant inlet 143 through which the coolant is introduced to inside; a coolant flow tube 144 through which the introduced coolant flows; and a coolant outlet 145 through which the coolant flown through the coolant flow tube 144 is discharged.

In addition, the gas containing the plurality of species of components generated inside the cylinder 12 is introduced from the lower opening 141 into the heat exchanger 14b through the vent 14a. A part of the introduced gas is liquefied, and the remainder thereof is passed in gaseous form. The component to be liquefied in this process is determined depending on the temperature of the heat exchanger 14b, and the temperature is controlled by the temperature of the coolant used.

For example, the heat exchanger 14b exhibits the following function if the gas containing the high boiling point gas component and the low boiling point gas component is introduced into the heat exchanger 14b while the temperature of the coolant is set so that the temperature in the heat exchanger 14b is in a range lower than the boiling point of the high boiling point gas component and equal to or higher than the boiling point of the low boiling point gas component.

First, if the above-described gas is introduced from the lower opening 141 into the heat exchanger 14b, the gas comes into contact with the coolant flow tube 144 (comes into indirect contact with the coolant), the high boiling point gas component among the components contained in the gas is cooled and liquefied, and the liquefied high boiling point gas component is dropped down by action of gravity. The dropped liquid is moved in a direction opposite to a ventilation direction of the above-described gas, is moved back into the cylinder 12 through the lower opening 141 and the vent 14a, and is remixed into the heated molten substance.

On the other hand, the low boiling point gas component of the gas is not liquified and is discharged in gaseous form from the upper opening 142 even when coming into contact with the coolant flow tube 144 described above (into indirect contact with the coolant), and is fed to the heat exchanger 15 through the pipe 18.

The temperature of the heat exchanger 14b is controlled depending on the type of the resin material to be thermally decomposed, and is controlled to a comparative high temperature of 100°C or higher. Therefore, as the coolant, a fluid such as an oil allowed to flow as the liquid substance even at the high temperature of 100°C or more is used. If such an oil is used, generally, the heat exchanger 14b is controlled to a predetermined temperature while the oil for the coolant is circulated by a hot oil unit connected to the coolant inlet 143 and the coolant outlet 145.

The heat exchanger 14b is disposed directly above the vent 14a so that such a liquefied component as described above is directly moved back to the cylinder 12 when dropping. Thus, the high boiling point gas component is remixed into the molten material inside the cylinder 12, and therefore, the molecular weight can be further reduced by the further thermal decomposition. Such a configuration is preferred because of more efficiently advancing the thermal decomposition.

The heat exchanger 15 is different in the controlled temperature but may be the same in the configuration as that of the heat exchanger 14b. However, as different from the heat exchanger 14b, the liquefied gas component is discharged as liquid form from a discharging port separately disposed from an introducing port for the gas (gas remainder). In this regard, an existing heat exchanger having a general configuration is preferably used as the heat exchanger 15. Moreover, if the gas unliquefied by the heat exchanger 15 is contained, still another discharge port is disposed, and the liquid component and the gaseous component are separated from each other.

Here, the following function is exhibited if the gas containing the low boiling point gas component and passed through the heat exchanger 14b is introduced into the heat exchanger 15 while the temperature of the coolant is set so that the temperature in the heat exchanger 15 is in a range lower than the boiling point of the low boiling point gas component.

First, when the above-described gas (gas remainder) is introduced into the heat exchanger 15, the gas comes into contact with the coolant flow tube (comes into indirect contact with the coolant), and the low boiling point gas component among the components contained in the gas is cooled and liquefied. The liquefied low boiling point gas component is fed to the liquid collection container 16.

In this process, all the components in the gas containing the low boiling point gas component may be liquefied, or some thereof may be liquefied and collected while a component having a much lower boiling point than that of the low boiling point compound may be discharged in gaseous form. The discharge gas may be released to ambient air unless adversely affecting the environment, may be collected and reused, or may be subjected to discarding process.

The temperature of the heat exchanger 15 is controlled to a comparatively low temperature lower than 100°C although appropriately determined depending on the type of the resin material to be thermally decomposed. Therefore, water or the like often used as the coolant can be used as the coolant used here, and the coolant inlet and the coolant outlet are generally configured so that the coolant is circulated while the temperature is controlled at a predetermined temperature by a chiller unit or the like.

### [Description of Resin Material and Compound Generated by Thermal Decomposition]

Next, with regard to the thermal decomposition and the liquefaction process described above, compounds generated by the thermal decomposition and the process conditions for the compounds in specific resin materials will be described.

### <Polycarbonate (PC)>

If the thermal decomposition target resin material is polycarbonate (PC), water is added as a reaction aid or an additive, and the thermal decomposition is performed inside the cylinder 12. In this process, the cylinder 12 is heated to a temperature of, for example, 260 to 320°C to advance the thermal decomposition.

By the thermal decomposition, bisphenol A (melting point: 159°C, boiling point: 220°C) and phenol (melting point: 40.5°C, boiling point: 182°C) are generated from the polycarbonate (PC). The gas introduced into the heat exchanger 14b contains water (melting point: 0°C, and boiling point: 100°C) unreacted with the generated compound described above.

Therefore, for example, the temperature of the heat exchanger 14b is set to be equal to or higher than 182°C and lower than 220°C to liquefy the bisphenol A while the temperature of the heat exchanger 15 is set to be lower than 182°C to liquefy the phenol. In this process, since the temperature of the heat exchanger 15 is set to be equal to or higher than 100°C and lower than 182°C, the phenol can be collected in liquid form, and water (vapor) can be also released into ambient air.

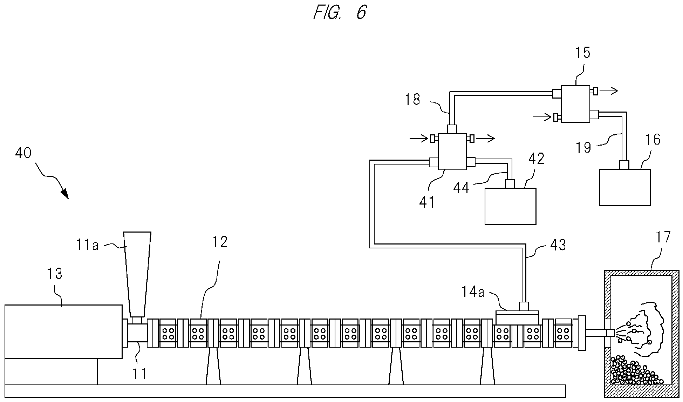

Note that the bisphenol A if being remixed into the molten material inside the cylinder 12 is collected into the solid collection container 17, and, in this case, is difficult to be separated and collected from another residue. Therefore, in the case of polycarbonate, a system configuration as described in a third embodiment later is preferably used for collection in a liquid collection container 42 (FIG. 6).

### <Polyamide-6 (PA6)>

If the thermal decomposition target resin material is polyamide-6 (PA6), water is added as a reaction aid or an additive, and the thermal decomposition is performed inside the cylinder 12. In this process, the cylinder 12 is heated to, for example, a temperature of 230 to 350°C to advance the thermal decomposition.

Caprolactam (melting point: 69°C, boiling point: 267°C) is generated from the polyamide-6 (PA6) by the thermal decomposition. The gas introduced into the heat exchanger 14b contains water (melting point: 0°C, boiling point: 100°C) unreacted with the compound described above.

Therefore, for example, the temperature of the heat exchanger 14b is set to be equal to or higher than 100°C and lower than 267°C to liquefy the caprolactam while the temperature of the heat exchanger 15 is set to be lower than 100°C to liquefy the water vapor.

### <Polyethylene Terephthalate (PET)>

If the thermal decomposition target resin material is polyethylene terephthalate (PET), water or ethylene glycol is added as a reaction aid or an additive, and the thermal decomposition is performed inside the cylinder 12. In this process, the cylinder 12 is heated to, for example, a temperature of 255 to 320°C to advance the thermal decomposition.

(2) By the thermal decomposition, bis(2-hydroxyethyl)terephthalate (melting point: 106°C, boiling point: 317°C or higher) is generated from the polyethylene terephthalate (PET) when being added with the ethylene glycol. The gas introduced into the heat exchanger 14b contains ethylene glycol (melting point: -10°C, boiling point: 244°C) unreacted with the generated compound described above.

Therefore, for example, the temperature of the heat exchanger 14b is set to be equal to or higher than 244°C and lower than 317°C to liquefy the bis (2-hydroxyethyl) terephthalate while the temperature of the heat exchanger 15 is set to be lower than 244°C to liquefy the ethylene glycol.

### <Polyethylene (PE) and Polypropylene (PP)>

If the thermal decomposition target resin material is polyethylene (PE) or polypropylene (PP), the thermal decomposition is performed inside the cylinder 12. In this process, the cylinder 12 is heated to, for example, a temperature of about 390 to 430°C to advance the thermal decomposition.

By the thermal decomposition, the polyethylene (PE) or the polypropylene (PP) is decomposed into various types of hydrocarbon compounds having different carbon numbers from one another. The hydrocarbons gasified in this process may be exemplified as compounds shown in Table 1, and the melting points and the boiling points of these hydrocarbon compounds are also shown in Table 1.

**[Table 1]**

| CARBON NUMBER | MOLECULAR FORMULA | COMPOUND NAME | MOLECULAR WEIGHT | MELTING POINT (° C) | BOILING POINT (° C) |
|---|---|---|---|---|---|
| 1 | CH₄ | METHANE | 16.04 | -183 | -161 |
| 2 | C₂H₆ | ETHANE | 30.07 | -183 | -89 |
| 3 | C₃H₈ | PROPANE | 44.1 | -189.7 | -42 |
| 4 | C₄H₁₀ | BUTANE | 58.12 | -138 | -0.5 |
| 5 | C₅H₁₂ | PENTANE | 72.15 | -129 | 36 |
| 6 | C₆H₁₄ | HEXANE | 86.18 | -95 | 69 |
| 7 | C₇H₁₆ | HEPTANE | 100.2 | -91 | 98 |
| 8 | C₈H₁₈ | OCTANE | 114.23 | -56.8 | 126 |
| 9 | C₉H₂₀ | NONANE | 128.26 | -51 | 150.8 |
| 10 | C₁₀H₂₂ | DECANE | 142.28 | -29.7 | 174.2 |
| 11 | C₁₁H₂₄ | UNDECANE | 156.31 | -26 | 196 |
| 12 | C₁₂H₂₆ | DODECANE | 170.33 | -12 | 216 |
| 13 | C₁₃H₂₈ | TRIDECANE | 184.36 | -5 | 234 |
| 14 | C₁₄H₃₀ | TETRADECANE | 198.39 | 6 | 255 |
| 15 | C₁₅H₃₂ | PENTADECANE | 212.41 | 9.9 | 270 |
| 16 | C₁₆H₃₄ | HEXADECANE | 226.44 | 18 | 287 |
| 17 | C₁₇H₃₆ | HEPTADECANE | 240.47 | 21 | 302 |
| 18 | C₁₈H₃₈ | OCTADECANE | 254.49 | 30 | 317 |
| 19 | C₁₉H₄₀ | NONADECANE | 268.52 | 34 | 330 |
| 20 | C₂₀H₄₂ | ICOSANE | 282.55 | 36.7 | 342.7 |
| 21 | C₂₁ H₄₄ | HENICOSANE | 296.58 | 40.5 | 356.5 |

In such a case, the gas generated inside the cylinder 12 is a gas containing the various types of the above-described hydrocarbon compounds having carbon numbers of 1 to 21. Although depending on a temperature condition, a hydrocarbon compound having a high carbon number is not gasified but is in the molten state inside the cylinder 12, and is discharged and collected from the end portion 12c of the cylinder 12 into the solid collection container 17.

In addition, as described above, the generated gas is introduced into the heat exchanger 14b first. In this process, an optional compound can be selected as the high boiling point gas component which is a liquefaction target, and may be determined in consideration of the following control temperature in the heat exchanger 15. For example, if the control temperature in the heat exchanger 15 is 15°C, a gas component cooled in the heat exchanger 15 is precipitated as a solid substance when having a melting point of 15°C or higher. Accordingly, in this case, when a hydrocarbon (hydrocarbon having 16 or more carbon atoms) whose number of carbon atoms is larger than that of pentadecane having 15 carbon atoms (melting point: 9.9°C) is contained, the solid substance adheres into the heat exchanger 15, and the efficiency of the thermal decomposition is adversely reduced under continuation of the process. The further adhesion of the solid substance resulted in the deposition finally causes the clog, and may lead to a situation that is difficulty in the continuation of the thermal decomposition.

Therefore, in the case of the condition described above, the high boiling point gas component to be liquefied in the heat exchanger 14b is preferably set to be a hydrocarbon having 16 carbon atoms (hexadecane, Chemical Formula: C₁₆H₃₄). In this case, the hexadecane is liquefied in the heat exchanger 14b, and therefore, the gas component introduced into the heat exchanger 15 does not contain the hexadecane. Accordingly, even if the control temperature in the heat exchanger 15 is set to be 15°C, the above-described failure can be prevented since the gas does not contain a component solidified in the heat exchanger 15 because of not containing a component having a melting point equal to or higher than 15°C.

In such a process, the control temperature in the heat exchanger 14b is preferably set to be, for example, a temperature that is equal to or higher than the melting point and lower than the boiling point (equal to or higher than 18°C and lower than 287°C). However, in the thermal decomposition, compounds having similar molecular weights and having similar melting points and similar boiling points to one another are contained. Therefore, the target compound is efficiently liquefied, and is preferably configured to avoid containing the compound having the lower boiling point than that of the target compound as much as possible, and thus, to avoid mixing with an unnecessary compound. Therefore, the control temperature in the heat exchanger 14b in the thermal decomposition under the condition described above is preferably set to be about 230 to 260°C. As a result, the hydrocarbon compound having 16 or more carbon atoms is moved back into the cylinder 12, and is remixed into the molten material inside the extruder. By the remixture, the hydrocarbon compound receives thermal energy inside the heated cylinder 12 again, and therefore, is further thermally decomposed into a hydrocarbon compound having 15 or less carbon atoms.

### <Second Embodiment>

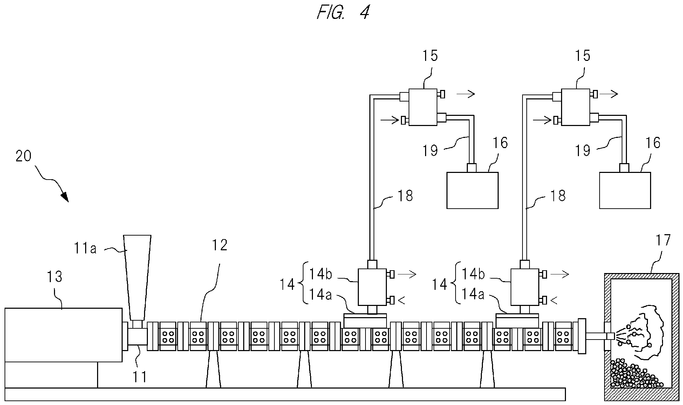

An overall configuration of a resin-material thermal decomposition system in the present embodiment and a resin-material thermal decomposition method using the system will be described with reference to FIG. 4.

FIG. 4 is an explanatory diagram (side view) illustrating a schematic configuration of a resin-material thermal decomposition system 20 of the second embodiment. The resin-material thermal decomposition system 20 is a resin-material thermal decomposition system having the same configuration as the configuration of the above-described resin-material thermal decomposition system 10 in FIG. 1 except that the system 20 includes two sets of the ventilator 14, the heat exchanger 15 and the liquid collection container 16.

In other words, the resin-material thermal decomposition system 20 illustrated in FIG. 4 includes: the resin-material supply portion 11; the cylinder 12 including the screw; the rotational drive mechanism 13 that drives the screw of the cylinder 12; the ventilators 14 each including the vent 14a and the heat exchanger 14b; the heat exchangers 15; the liquid collection containers 16; and the solid collection container 17. Elements configuring the apparatuses are the same as those in the embodiment described above. Hereinafter, descriptions of the same configurations as the already described configurations are omitted, and different portions will be mainly described in detail.

As described above, the resin-material thermal decomposition system 20 differs from the resin-material thermal decomposition system 10 in that the resin-material thermal decomposition system 20 includes two sets of the ventilator 14, the heat exchanger 15 and the liquid collection container 16.

Because of the two sets, the resin-material thermal decomposition system 20 includes an upstream ventilator 14 and a downstream ventilator 14. In this case, the gas generated inside the cylinder 12 is thermally exchanged by the upstream ventilator 14 first, and a part of the resultant gas is liquified and remixed into the cylinder 12 while the remainder thereof is fed to the heat exchanger 15.

The liquefied and remixed component is a compound not having a sufficiently low molecular weight, and is further thermally decomposed inside the cylinder 12 to have a much lower molecular weight. The generated monomer and low-molecular-weight compound that have been remixed and thermally decomposed again are thermally exchanged by the downstream ventilator 14 next, a part of the compound is liquefied and remixed into the cylinder 12 while the remainder thereof is fed to the heat exchanger 15.

In the resin-material thermal decomposition system 20 of the present embodiment, as described above, by the upstream ventilator 14, the component having the sufficiently low molecular weight is removed from the cylinder 12, and the component having the insufficiently low molecular weight is moved back into the cylinder 12, and is thermally decomposed again. Then, by the downstream ventilator 14, the component having the sufficiently low molecular weight is removed from the cylinder 12, and the component having the insufficiently low molecular weight is moved back into the cylinder 12.

As described above, energy can be selectively applied to a component that needs to be thermally decomposed, depending on a degree of the molecular weight of the gas component. Moreover, in view of the resin material, the component having the insufficiently low molecular weight has an opportunity for being further thermally decomposed. Therefore, by the configuration of the present embodiment, the thermal decomposition can be more efficiently performed.

From such a viewpoint, a disposing relationship between the upstream ventilator 14 and the downstream ventilator 14 can be optionally determined depending on the degree of the thermal decomposition of the resin material inside the cylinder 12. If the two ventilators 14 are close to each other, the function described above cannot be sufficiently exhibited. Therefore, the disposing is preferably set so as to secure time for reducing the molecular weight again.

Moreover, the process may be performed while the temperatures of the upstream ventilator 14 and the downstream ventilator 14 are controlled at the same temperature and the temperatures of the upstream heat exchanger 15 and the downstream heat exchanger 15 are controlled at the same temperature or different temperatures, respectively.

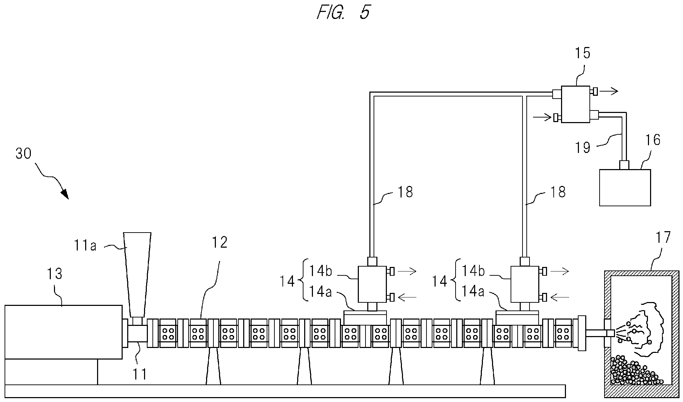

As shown in a resin-material thermal decomposition system 30 illustrated in FIG. 5, note that the gas discharged from two ventilators 14 in the above-described resin-material thermal decomposition system 20 in FIG. 4 may be processed by one heat exchanger 15.

The resin-material thermal decomposition system 30 includes: the resin-material supply portion 11; the cylinder 12 including the screw; the rotational drive mechanism 13 that drives the screw of the cylinder 12; the ventilators 14 each made of the vent 14a and the heat exchanger 14b; the heat exchanger 15; the liquid collection container 16; and the solid collection container 17. Elements configuring the apparatus are the same as those in the embodiments described above.

Since the number of the heat exchanger 15 is one, a space for disposing the apparatus can be reduced, and the time and labor for maintenance or the like can be reduced, and therefore, this configuration is preferable.

### <Third Embodiment>

An overall configuration of a resin-material thermal decomposition system in the present embodiment and a resin-material thermal decomposition method using the system will be described with reference to FIG. 6.

FIG. 6 is an explanatory diagram (side view) illustrating a schematic configuration of a resin-material thermal decomposition system 40 of the third embodiment. The resin-material thermal decomposition system 40 is a resin-material thermal decomposition system having the same configuration as the configuration of the above-described resin-material thermal decomposition system 10 in FIG. 1 except that the heat exchanger 14b of the ventilator 14 is separated from the vent 14a and is connected through a pipe thereto.

In other words, the resin-material thermal decomposition system 40 illustrated in FIG. 6 includes: the resin-material supply portion 11; the cylinder 12 including the screw; the rotational drive mechanism 13 that drives the screw of the cylinder 12; the vent 14a; the heat exchanger 15; the liquid collection container 16; the solid collection container 17; a heat exchanger 41; and a liquid collection container 42. Elements configuring the apparatuses are the same as those in the embodiment described above. Hereinafter, descriptions of the same configurations as the already described configurations are omitted, and different portions will be mainly described in detail.

As described above, the resin-material thermal decomposition system 40 differs from the resin-material thermal decomposition system 10 in that the vent 14a and the heat exchanger 14b are separated and disposed as different elements from each other. In other words, the heat exchanger 41 is disposed instead of the heat exchanger 14b, the vent 14a and the heat exchanger 41 are connected through a pipe 43, and the liquid collection container 42 is connected to the heat exchanger 41 through a pipe 44. Furthermore, the heat exchanger 41 is connected to the heat exchanger 15 through a pipe 18.

In the resin-material thermal decomposition system 40, by the above-described configuration, the gas discharged from the vent 14a is introduced into the heat exchanger 41 through the pipe 43, and the high boiling point gas component is cooled and liquefied in the heat exchanger 41. The liquefied high boiling point gas component is collected into the liquid collection container 42 through the pipe 44. Then, the gas remainder not liquefied in the heat exchanger 41 is fed to the heat exchanger 15 through the pipe 18. Subsequent processes are similar to those in the embodiments described above.

Even in this embodiment, the gas from which the component to be solidified has been removed is introduced into the heat exchanger 15, and therefore, the failure such as the clogging in the heat exchanger 15 can be avoided. Moreover, since the vent 14a and the heat exchanger 41 are the separate members as described above, cleaning of each member or the like is easily performed, and the maintenance performance is improved, and therefore, a maintenance cost can be reduced.

Note that the liquid substance of the high boiling point gas component is collected into the liquid collection container 42 in the above description, but may be moved back into the cylinder 12, and may be thermally decomposed again.

In the foregoing, the present invention has been concretely described based on the embodiments and the examples. However, it is needless to say that the present invention is not limited to the foregoing embodiments and examples, and various modifications can be made within the scope of the present invention.

### EXPLANATION OF REFERENCE CHARACTERS

10, 20, 30, 40 resin-material thermal decomposition system
11 resin-material supply portion
12 cylinder
12a screw
12b opening
12c end portion
13 rotational drive mechanism
14 ventilator
14a vent
14b, 15, 41 heat exchanger
16, 42 liquid collection container
17 solid collection container
18, 19, 43, 44 pipe

## Claims

1. A resin-material thermal decomposition method comprising steps of:
(a) thermally decomposing the resin material inside a cylinder of an extruder including a screw;
(b) after the step (a), discharging, from a vent, a gas containing a plurality of species of components generated by the thermal decomposition of the resin material;
(c) after the step (b), cooling and liquefying a part of the gas by a first heat exchanger; and
(d) after the step (c), cooling and liquefying a gas remainder by a second heat exchanger.

2. The resin-material thermal decomposition method according to claim 1,
wherein the gas contains a high boiling point gas component and a low boiling point gas component having a lower boiling point than a boiling point of the high boiling point gas component, and,
in the step (c), a temperature of the first heat exchanger is controlled to be lower than the boiling point of the high boiling point gas component and equal to or higher than a melting point of the high boiling point gas component.

3. The resin-material thermal decomposition method according to claim 2,
wherein in the step (c), the temperature of the first heat exchanger is controlled to be equal to or higher than the boiling point of the low boiling point gas component.

4. The resin-material thermal decomposition method according to claim 3,
wherein in the step (d), a temperature of the second heat exchanger is controlled to be lower than the boiling point of the low boiling point gas component and equal to or higher than a melting point of the low boiling point gas component.

5. The resin-material thermal decomposition method according to claim 1,
wherein in the step (c), a component liquefied by the first heat exchanger is remixed into the cylinder.

6. A resin-material thermal decomposition system comprising (a) and (b) described below,
(a) an extruder including:
a cylinder into which the resin material is introduced;
a heat source disposed in the cylinder to thermally decompose the resin material;
a screw disposed inside the cylinder and feeding the resin material;
a vent used for discharging a gas containing a plurality of species of components generated inside the cylinder by the thermal decomposition of the resin material; and
a first heat exchanger connected to the vent, and liquefying a part of the gas, and
(b) a second heat exchanger used for cooling and liquefying a remainder of the gas passed in gaseous form through the first heat exchanger.

7. The resin-material thermal decomposition system according to claim 6,
wherein the gas contains a high boiling point gas component and a low boiling point gas component having a lower boiling point than a boiling point of the high boiling point gas component,
and
a control temperature of the first heat exchanger is lower than the boiling point of the high boiling point gas component and equal to or higher than a melting point of the high boiling point gas component.

8. The resin-material thermal decomposition system according to claim 7,
wherein the control temperature of the first heat exchanger is equal to or higher than the boiling point of the low boiling point gas component.

9. The resin-material thermal decomposition system according to claim 8,
wherein a control temperature of the second heat exchanger is lower than the boiling point of the low boiling point gas component and equal to or higher than a melting point of the low boiling point gas component.

10. The resin-material thermal decomposition system according to claim 6,
wherein the first heat exchanger is disposed above the vent so that a component liquefied by the first heat exchanger is remixed into the cylinder.

11. A ventilator for an extruder, comprising:
a vent connected to the extruder; and
a heat exchanger disposed in the vent and used for cooling and liquefying a part of a discharge gas discharged from the vent.

12. The ventilator for the extruder according to claim 11,
wherein the heat exchanger is disposed above the vent so that a component liquefied by the heat exchanger is allowed to pass through the vent in a direction opposite to a ventilation direction of the discharge gas.
